(19) Europäisches Patentamt
European Patent Office
Office européen des brevets

(11) Veröffentlichungsnummer: **0 171 727**
**B1**

# (12) EUROPÄISCHE PATENTSCHRIFT

(45) Veröffentlichungstag der Patentschrift: **09.12.87**

(51) Int. Cl.⁴: **D 21 H 3/38**, C 08 F 8/14

(21) Anmeldenummer: **85109804.6**

(22) Anmeldetag: **05.08.85**

(54) **Oberflächenleimungsmittel für Papier.**

(30) Priorität: **16.08.84 DE 3429961**

(43) Veröffentlichungstag der Anmeldung: **19.02.86 Patentblatt 86/8**

(45) Bekanntmachung des Hinweises auf die Patenterteilung: **09.12.87 Patentblatt 87/50**

(84) Benannte Vertragsstaaten: **CH DE FR GB IT LI SE**

(56) Entgegenhaltungen:
**EP - A - 0 009 185**
**DD - B - 159 077**
**DD - B - 159 078**

(73) Patentinhaber: **BAYER AG, Konzernverwaltung RP Patentabteilung, D-5090 Leverkusen 1 Bayerwerk (DE)**

(72) Erfinder: **Sackmann, Günter, Dr., Friedenberger Strasse 11, D-5090 Leverkusen 3 (DE)**
Erfinder: **Beck, Ulrich, Dr., Weiherstrassee 17, D-5303 Bornheim 3 (DE)**
Erfinder: **Bäumgen, Heinz, Buchenweg 10, D-5090 Leverkusen (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft Oberflächenleimungsmittel für Papier und papierähnliche Materialien auf Basis von partiell mit aliphatischen Monoalkoholen bisveresterten Copolymerisaten aus Maleinsäureanhydrid, Diisobutylen und gegebenenfalls einem Vinylmonomeren, die auf Papiersorten unterschiedlicher Zusammensetzung eine ausgezeichnete Leimungswirkung ergeben, und die in Stärke enthaltenden Leimungsflotten nur sehr wenig oder aber überhaupt nicht zum Schäumen neigen.

Zwar gibt es bereits eine Reihe von anionischen Oberflächenleimungsmitteln auf Basis alternierend aufgebauter Copolymerisate aus Maleinsäureanhydrid und Diisobutylen, wie sie in den Deutschen Offenlegungsschriften 2 361 544, 2 501 123 und 2 701 760 beschrieben sind. Diese Leimungsmittel weisen ausgezeichnete Leimungswirkungen auf, besitzen jedoch auch einige anwendungstechnische Nachteile, wie z.B. ihre unter bestimmten Praxisbedingungen auftretende Neigung zur Schaumbildung. Diese Schaumbildung, die häufig in der Leimpressenflotte zu beobachten ist, kann verschiedene Ursachen haben; z.B. die Wasserhärte, die Art der verwendeten Stärke oder apparative Gegebenheiten an der Papiermaschine. Die EP-A1-0 009 185 gibt zwar eine Lehre zur Herstellung eines schaumarmen Oberflächenleimungsmittels für Papier in Form von wässrigen oder wässrig-alkoholischen Alkali-, Amin- oder Ammoniumsalzlösungen von Carbonsäurehalbamidgruppen enthaltenden Copolymerisaten aus Maleinsäureanhydrid und Diisobutylen und/oder Terpolymerisaten aus Maleinsäureanhydrid, Diisobutylen und einem mit Maleinsäureanhydrid copolymerisierenden Vinylmonomeren. Im praktischen Einsatz dieses Leimungsmittels hat sich jedoch gezeigt, dass seine Schaumneigung — obwohl gering — in vielen Fällen doch noch zu hoch ist, so dass weiterhin die Notwendigkeit besteht, neue Oberflächenleimungsmittel mit noch geringerer Tendenz zum Schäumen und gleichzeitig unverändert guten Leimungseigenschaften zu entwickeln.

Die vorliegende Erfindung betrifft Oberflächenleimungsmittel für Papier und papierähnliche Materialien, wie Karton oder Pappe, enthaltend wässrige- oder wässrig-alkoholische Alkali-, Amin - oder Ammoniumsalzlösungen von Copolymerisaten aus Maleinsäureanhydrid und Diisobutylen und gegebenenfalls einem Vinylmonomeren der Formel

R
$>C=CH_2$ I
$R_1$

in der

R H, $-CH_3$, $-C_2H_5$, $-OR_2$, $-OCOCH_3$,

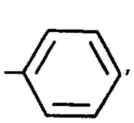, 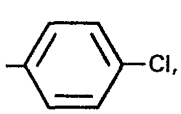Cl, 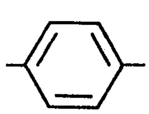$CH_3$,

$-CH_2OH$, $-CH_2-O-COCH_3$,

$R_1$ H, $-CH_3$ und

$R_2$ Alkyl bezeichnen,

wobei die Anhydridgruppen der Copolymerisate zu 25-90 Mol-% mit primären aliphathischen Monoalkoholen mit 1 bis 12 C-Atomen bisverestert sind.

Die neuen Leimungsmittel zeichnen sich dadurch aus, dass sie bei ihrem Einsatz auf der Leimpresse einer Papiermaschine wenig oder keinen Schaum entwickeln und gleichzeitig ausgezeichnete Leimungseigenschaften besitzen.

Es sind zwar die Halbesterprodukte der obengenannten Copolymerisate als sehr wirksame Leimungsmittel bekannt, aber sie besitzen eine ausgeprägte Neigung zur Schaumbildung, die sowohl beim Herstellungsprozess als auch bei ihrer Anwendung auf der Papiermaschine deutlich zu beobachten ist. Durch die weitere Umsetzung der polymeren Halbester mit Monoalkohol zu partiellen Bisestern wird nun die Schaumbildung dieser Substanzen stark unterdrückt — ohne Beeinträchtigung ihrer ausgezeichneten Leimungswirkung.

Geeignete Vinylmonomere der Formel (I) zur Herstellung der Terpolymerisate sind beispielsweise Isobutylen, Styrol, α-Methylstyrol, Allylalkohol und Isobutylvinylether.

Die Herstellung der den neuen Leimungsmittel zugrunde liegenden Copolymerisate ist aus der Literatur bekannt.

Vorzugsweise verwendet man auf radikalischem Wege hergestellte Copolymerisate aus 0,8-1,1 Mol Maleinsäureanhydrid und 0,8-1,1 Mol Diisobutylen bzw. Diisobutylen/Vinylmonomer der Formel I, wobei die Molangaben für Diisobutylen sich auf den Gehalt an 2,4,4-Trimethylpenten-(1) beziehen.

Zur Auslösung dieser Copolymerisation können radikalbildende Substanzen, wie z.B. Peroxide, Hydroperoxide, Perester, Azoverbindungen, sowie Redoxkatalysatorsysteme eingesetzt werden.

Die Polymerisation kann drucklos in Substanz oder bevorzugt in Lösung durchgeführt werden. Erfolgt sie in Lösung, so sind solche Lösungsmittel bevorzugt, in denen sich sowohl die Monomeren, als auch die Copolymeren lösen, z.B. Aromaten wie Benzol, Toluol, halogenierte Aromaten wie Chlorbenzol, Chlortoluol, niedere Ketone wie Aceton, Ethylmethylketon, Ester niederer Fettsäuren wie Essigsäureethylester, chlorierte aliphatische Kohlenwassrestoffe wie Chloroform, Tetrachlorkohlenstoff, Ether wie Tetrahydrofuran, stark polare Lösungsmittel wie Dimethylformamid oder Dimethylsulfoxid. Die Polymerisationstemperatur liegt zwischen 20 und 150°C, vorzugsweise aber zwischen 30 und 120°C.

Als Beispiele für die einzusetzenden Monoalkohole seien genannt:

Methanol, Ethanol, n-Propanol, Isopropanol, n-Butanol, Isobutanol, sec.-Butanol, n-Pentanol, Isoamylalkohol, n-Hexanol, n-Octanol, n-Dodecanol und 2-Ethylhexanol.

Es können aber auch Gemische dieser Alkohole eingesetzt werden.

Die Umsetzung der Copolymerisate aus Maleinsäureanhydrid und Diisobutylen oder der Terpolymerisate aus Maleinsäureanhydrid, Diisobutylen und einem Vinylmonomeren der Formel (I) erfolgt in Lösung

oder Suspension in Gegenwart eines Schleppmittels für das sich abspaltende Reaktionswasser, wie z.B. Benzol, Toluol oder Xylol, bei der Siedetemperatur des jeweiligen Schleppmittels. Werden niedrigsiedende Alkohole zur Veresterung eingesetzt, dann wird die Reaktion unter Druck vorgenommen. Der Temperaturbereich der Veresterungsreaktion liegt im allgemeinen zwischen 80 und 170°C.

Zur Beschleunigung der Veresterungsreaktion können dem Reaktionsgemisch saure Katalysatoren, wie z.B. Schwefelsäure oder p-Toluolsulfonsäure, in Mengen zwischen 0,1 und 5 Gew.-%, bezogen auf das eingesetzte Polymerisat, zugesetzt werden.

Bevorzugt ist dabei p-Toluolsulfonsäure in einer Menge zwischen 0,5 und 2 Gew.-%. Bei der Durchführung der Veresterungsreaktion kann aber auch in der Weise vorgegangen werden, dass zunächst eine Halbesterbildung zwischen dem Co- oder Terpolymerisat und dem Monoalkohol erfolgt und daran anschliessend durch Zugabe von weiterem Monoalkohol zusammen mit dem sauren Katalysator ein Teil der Carboxylgruppen unter Wasserabspaltung zum Bisester umgesetzt wird. Die Halbesterbildung kann dabei entweder in Substanz, Suspension oder einem Lösungsmittel bei Temperaturen zwischen 80 und 160°C, bevorzugt bei 100-140°C, durchgeführt werden. Die sich darin anschliessende Bisveresterung wird dann unter den oben genannten Reaktionsbedingungen durchgeführt. Die Reaktionszeit liegt zwischen 4 und 24 Stunden. In der Regel wird sie aber dann als beendet betrachtet, wenn kein Reaktionswasser mehr abgespalten wird.

Natürlich ist es auch möglich, Diisobutylen direkt mit einem Gemisch aus Maleinsäurehalbester und Maleinsäurebisester, die durch direkte Veresterung aus Maleinsäureanhydrid mit den entsprechenden Monoalkoholen erhältlich sind, unter denselben Bedingungen, wie sie bei der Diisobutylen-Maleinsäureanhydrid-Copolymerisation üblich sind, zu den entsprechenden Copolymerisaten zu copolymerisieren.

Da die Veresterung der Maleinsäureanhydridmonomereinheiten nie quantitativ durchgeführt wird, und somit immer Carboxylgruppen sowie in geringem Umfange auch cyclische Anhydridgruppen übrigbleiben, können die veresterten Co- und Terpolymerisate durch Neutralisation mit wässriger Alkali-, Ammoniak- oder Aminlösungen in wasselösliche Salze überführt werden.

Die Salzbildung kann z.B. durch die Hydroxide der Alkalimetalle wie Natrium- und Kaliumhydroxid, Ammoniak oder durch primäre, sekundäre oder tertiäre Amine wie Methylamin, Dimethylamin, Ethanolamin, Triethylamin, Diethanolamin oder Triethanolamin erfolgen.

Da — wie aus IR-Spektren ersichtlich — neben den Halbester- und Bisestergruppierungen immer auch noch nicht umgesetzte Anhydrideinheiten in den Co- und Terpolymerisaten vorhanden sind, führt die Umsetzung mit den wässrigen Alkali-, Ammoniak- oder Aminlösungen auch zur Bildung von Halbamid/Halbammoniumsalzen, die ebenfalls wasserlöslich sind.

Diese wässrigen Lösungen eignen sich vorzüglich als anionische nicht schäumende Papierleimungsmittel im sauren und neutralen Bereich bei der Herstellung von Alaun-haltigen, Alaun-freien, vorgeleimten und holzhaltigen Papieren, die unterschiedliche Füllstoffe, wie Kaolin, Kreide und $TiO_2$ enthalten können.

In der Praxis wird zur Herstellung der Maleinsäureanhydrid-Diisobutylen-Copolymerisate ein technisches Gemisch aus 2,4,4-Trimethylpenten-(1) und 2,4,4-Trimethylpenten-(2) eingesetzt, wobei vornehmlich die Penten-(1)-Verbindung zu hochmolekularen Copolymerisaten reagiert.

In einer bevorzugten Ausführung der Erfindung werden die Leimungsmittel als wässrige Lösungen in Mischung mit Harnstoff und Harnstoffderivaten eingesetzt. Durch diese Abmischung ergibt sich ein zusätzlicher leimungsverstärkender Effekt sowie eine starke Verminderung der Lösungsviskosität der erfindungsgemässen Leimungsmittel. Vorzugsweise eingesetzte Harnstoffderivate sind solche, bei denen eines oder beide Stickstoffatome mit $C_1$-$C_4$-Alkylgruppen oder $C_1$-$C_4$-Hydroxylalkylgruppen, wie z.B. Hydroxymethylgruppen, substituiert sind. Als Beispiele für derartige Derivate seien Dimethylharnstoff, Tetramethylharnstoff und Dimethylolharnstoff genannt. Die Menge an zugesetztem Harnstoff bzw. Harnstoffderivaten beträgt dabei im allgemeinen 10 bis 200 Gew.-%, vorzugsweise 20 bis 100 Gew.-%, bezogen auf das Gewicht der Alkali-, Ammonium- und Aminsalze bzw. auf die Halbamid/Halbammoniumsalze der partiell mit Monoalkoholen bisveresterten Co- bzw. Terpolymerisate auf Basis von Maleinsäureanhydrid und Diisobutylen.

Durch den Zusatz von Harnstoff bzw. Harnstoffderivaten zu den Polymerisatlösungen kann die Konzentration dieser Polymerisate in der wässrigen Leimungsmittellösung stark verringert werden, wobei dieselbe Leimungswirkung erreicht wird, wie man sie bei alleiniger Anwendung der Polymerisate nur bei erheblich höheren Konzentrationen erzielen kann. Durch den Harnstoffzusatz wird also bewirkt, dass z.B. die Menge an wasserlöslichem Salz der partiell bisveresterten Co- und Terpolymerisate in der Leimungsmittellösung stark verringert werden kann, ohne dass die ausgezeichneten Leimungseigenschaften der Produkte vermindert werden.

Die erfindungsgemässen Oberflächenleimungsmittel für Papier sind nach allen bei der Papierherstellung für die Oberflächenleimung gebräuchlichen Verarbeitungsmethoden einsetzbar. Die Leimungsmittel können sowohl alleine als auch in Kombination mit Kunststoffdispersionen zur Anwendung kommen. Sie sind gegenüber schaumfördernden Einflüssen, wie z.B. ungünstigen apparativen Voraussetzungen und hohen Härtegraden des bei der Papierherstellung verwendeten Wassers, unempfindlich, so dass die Papieroberfächenleimungsmittel praktisch überall ohne eine den Produktionsvorgang störende Schaumbildung sowie ohne einen Zusatz von Entschämern eingesetzt werden können. Die erfindungsgemässen Produkte eignen sich entweder alleine oder in Kombination mit Leimungsmitteln, die zur Papiermasse zugegeben werden, für die Oberflächenleimung der meisten gängigen Papierqualitäten, wie z.B. alaunhaltige, alaunfreie, mit Kaolin gefüllte, mit Kreide gefüllte, mit $TiO_2$ gefüllte, neutrale, saure, unge-

leimte, vorgeleimte, holzhaltige und Altpapier enthaltende Papiere.

Die Prozentangaben in den folgenden Beispielen beziehen sich stets auf das Gewicht.

*Beispiel 1*

Herstellung des Papieroberflächenleimungsmittels

In einem 40 ltr. Stahlautoklaven, auf den eine Einrichtung zum Abscheiden von Wasser mit der Möglichkeit zur Rückführung von Lösungsmittel in den Kessel aufgebaut ist, wird eine Lösung von 3998 g Maleinsäureanhydrid in 5100 g Xylol vorgelegt.

Danach wird der Reaktor mit Stickstoff gespült und die Innentemperatur auf 100°C gebracht. Unter weiterem Überleiten von Stickstoff werden über zwei Dosierpumpen gleichzeitig 6258 g Diisobutylen [technisches Gemisch aus 2,4,4-Trimethylpenten-(1) und 2,4,4-Trimethylpenten-(2)] sowie eine Lösung von 128 g Azobisisobutyronitril (AIBN) in 4080 g Xylol innerhalb von 4 Stunden in den Autoklaven eingepumpt. Nach beendeter Zudosierung wird noch 6 Stunden bei 100°C gerührt, und danach gibt man ebenfalls gleichzeitig innerhalb von 30 Minuten 306 g Isobutylen und eine Lösung von 38 g t-Butyl-per-2-ethylhexamoat in 306 g Xylol zu. Danach wird noch 2 Stunden bei 100°C gerührt und anschliessend die Kesseltemperatur soweit angehoben, dass das Lösungsmittelgemisch zum Sieden kommt. Über die Apparatur zur Wasserabscheidung werden nun ca. 2000 g eines Lösungsmittelgemisches aus dem Kessel entfernt, dessen Hauptbestandteil 2,4,4-Trimethylpenten-(2) darstellt.

Nach Entfernen des Destillats wird die Temperatur des Lösungsmittelgemisches auf 110°C abgesenkt und eine Lösung von 3774 g n-Butanol, 67,5 g p-Toluolsulfonsäure in 4080 g Xylol in den Kessel eingedrückt und die Temperatur wieder soweit angehoben, dass die Reaktionsmischung kräftig siedet, wobei eine azeotrope Abscheidung von Reaktionswasser stattfindet. Das sich gleichzeitig mit dem Wasser abscheidende Lösungsmittel wird immer wieder in den Autoklaven zurückgeleitet. Wenn nach ca. 21stündiger Veresterungsreaktion kein Wasser mehr übergeht, dann wird die Kesseltemperatur auf 70°C abgesenkt und 30 g Triethylamin zugegeben.

Die entstehende Polymerlösung wird kontinuierlich in einen 100 ltr. Rührkessel mit aufgesetztem Kühler, in dem sich eine auf 60°C erwärmte Lösung 5100 g Harnstoff in 52 000 g Wasser befindet, eingeleitet. Dabei wird unter Abdestillieren des Lösungsmittels bei einem Vakuum von ca. 100 mbar das Polymerisat als feines weisses Pulver ausgefällt. Wenn kein Lösungsmittel mehr übergeht, wird das ausgefallene Produkt durch Zugabe von 5220 g einer wässrigen 25 Gew.-%igen Ammoniaklösung in Lösung gebracht und durch Entgasen unter Anlegen eines Vakuums von 180-36 mbar bei einer Temperatur von 50°C von Lösungsmittel- und Monomerresten befreit. Durch Verdünnen mit Wasser wird die erhaltene Polymerlösung auf einen Feststoffgehalt von 20,6 Gew.-% eingestellt.

Viskosität der 20,6%igen Lösung: 122 mPas (20°C).

Diese Lösung kann direkt zur Oberflächenleimung von Papier eingesetzt werden, wie aus den nachfolgenden Anwendungsbeispielen 1 und 2 hervorgeht.

*Beispiel 2*

In einem 2 ltr. Dreihalskolben mit aufgesetztem Wasserabscheider werden 105 g eines alternierenden Copolymerisats aus Maleinsäureanhydrid und Diisobutylen mit einem Zahlenmittelmolekulargewicht von ca. 40000 in 300 g Toluol suspendiert und auf 115°C erhitzt. Nun addiert man 25,5 g n-Hexanol sowie 0,75 g p-Toluolsulfonsäure und erhitzt so lange zum Sieden bis sich kein Wasser mehr abscheidet. Nach 24 Stunden haben sich 1,7 ml Wasser abgeschieden. Nun werden zu der entstandenen Polymerlösung 0,5 g Triethylamin gegeben, und diese Lösung wird in ein unter Vakuum stehendes Rührgefäss, das eine Lösung von 68 g Harnstoff in 1,5 ltr. Wasser enthält, bei einer Temperatur von 50°C eingeleitet. Dabei fällt das partiell bisveresterte Copolymerisat als weisses Pulver aus. Diese wässrige Suspension wird so lange unter Vakuum gehalten, bis kein Lösungsmittel mehr übergeht. Danach werden 50 g einer 25%igen wässrigen Ammoniaklösung zugegeben. Nach 1stündigem Rühren bei 50°C entsteht eine klare wässrige Lösung, die durch Entgasen bei einem Vakuum von 30 mbar von restlichen Lösungsmittelmengen befreit wird. Die Entgasung wird so lange fortgeführt bis die Lösung einen Feststoffgehalt von 15 Gew.-% hat.

Viskosität der 15%igen Lösung: 93 mPas (20°C).

Durch die Umsetzung mit weiteren Monoalkoholen, wie z.B. n-Pentanol, 2-Ethylhexanol, n-Octanol und n-Dodecylalkohol können nach den in den Herstellungsbeispielen 1 und 2 angegebenen Vorschriften weitere Oberflächenleimungsmittel hergestellt werden.

*Anwendungsbeispiel 1:*

Die folgenden Anwendungsbeispiele sollen die geringe Schaumneigung sowie die ausgezeichnete Leimungswirkung der erfindungsgemässen Papieroberflächenleimungsmittel nachweisen. Das Schaumverhalten wurde dabei auf folgende Weise untersucht:

0,4% Gew.-% Wirksubstanz werden in einer Leimungsflotte aus 5 Gew.-% handelsüblicher Stärke (Perfectamyl A 4692®) gelöst und auf 60°C erwärmt. 200 ml dieser Leimungsflotte werden aus einem Aluminiumgefäss, das an seiner Unterseite eine kreisförmige Öffnung von 4 mm Durchmesser (Ford-Becher) besitzt, aus einer Höhe von 60 cm in ein graduiertes Becherglas im freien Fall geleitet. Das Volumen in ml des sich über der Flüssigkeitsoberfläche bildenden Schaums wird einmal sofort sowie nach 1minütigem Stehen an der Luft bestimmt. Der erste Wert gibt dabei Aufschluss über die Schaumbildungstendenz des Leimungsmittels und der zweite Wert über die Schnelligkeit des Schaumabbaus bzw. dessen Stabilität.

Als Vergleichssubstanzen wurden dabei ein gemäss DE-OS 2 361 554 hergestelltes Halbesterprodukt sowie ein gemäss EP 0 009 185 erhältliches Halbamidprodukt eingesetzt.

TABELLE

| erfindungsgemässes Leimungsmittel | | Schaumvolumen in ml sofort | nach 1 Min. |
|---|---|---|---|
| nach Beispiel 1 | verestert mit n-Butanol | 70 | 40 |
| nach Beispiel 1 | verestert mit n-Pentanol | 60 | 50 |
| nach Beispiel 2 | verestert mit n-Pentanol | 60 | 40 |
| nach Beispiel 2 | verestert mit n-Hexanol | 100 | 90 |
| nach Beispiel 2 | verestert mit n-Octanol | 100 | 100 |
| nach Beispiel 2 | verestert mit n-Dodecanol | 120 | 110 |
| Leimungsmittel gemäss DE-OS 2 361 544 | | 200 | 160 |
| Leimungsmittel gemäss EP 0 009 185 | | 150 | 120 |

*Anwendungsbeispiel 2*

Die Leimungswirkung der erfindungsgemässen Leimungsmittel wurde auf vier verschiedenen Papiersorten geprüft, welche folgende Zusammensetzung hatten:

a) Alaunfreies Ppier:
50% Nadelholzzellstoff, 50% Laubholzzellstoff, 9,5% Clay-Asche, pH-Wert im Stoffauflauf: 7,5; Nassaufnahme in einer Laborleimpresse: ca. 85%; Papiergewicht: 80 g/$m^2$.

b) Alaunhaltiges Papier:
50% Nadelholzzellstoff, 50% Laubholzzellstoff, 1% Alaun, 11,2% Clay-Asche, pH-Wert im Stoffauflauf: 4,4; Nassaufnahme: ca. 80%; Papiergewicht: 80 g/$m^2$.

c) Vorgeleimtes Papier:
50% Nadelholzzellstoff, 50% Laubholzzellstoff, 1% Alaun, 0,1% Bewold-Leim, 11,1% Clay-Asche, pH-Wert im Stoffauflauf: 4,5; Nassaufnahme: ca. 70%; Papiergewicht: 80 g/$m^2$.

d) Holzhaltiges Papier:
40% Nadelholzzellstoff, 60% Holzschliff, 14,1% Clay-Asche, pH-Wert im Stoffauflauf: 4,5; Nassaufnahme: ca. 50%; Papiergewicht: 75 g/$m^2$.

Die Leimung der Papiere erfolgte auf einer Laborleimpresse der Fa. Mathis, Zürich, Schweiz, Type HF. Als Leimungsflotte wurde eine Lösung von 5 Gew.-% handelsüblicher Stärke und 0,13, 0,16 und 0,20 Gew.-% des zu prüfenden Leimungsmittels (berechnet als 100%ige Wirksubstanz) in 94,87, 94,84 und 94,80 Gew.-% Wasser verwendet.

Die Trocknung der oberflächengeleimten Papiere erfolgte auf einem Trockenzylinder innerhalb einer Minute bei ca. 100°C. Vor der Leimungsprüfung wurden die Papiere 2 Stunden bei Raumtemperatur klimatisiert.

Zur Beurteilung des Leimungsgrades der oberflächengeleimten Papiere wurden die Cobb-Werte (nach DIN 53132) bestimmt sowie Tintenschwimmproben durchgeführt. Für die Tintenschwimmproben wurden die Papiere in Streifen von 3 cm Breite und 9 cm Länge geschnitten und auf blaue Prüftinte gelegt. Nach für die einzelnen Papiersorten unterschiedlichen Prüfzeiten (Alaun-frei: 7 Min., Alaun-haltig: 20 Min., Vorgeleimt: 10 Min., Holzhaltig: 5 Min.) wurden die Probepapiere von der Tinte genommen, rückseitig auf Löschpapier abgequetscht und nach 5 Minuten beurteilt. Zur qualitativen Bestimmung der Tintendurchdringung durch das Papier und somit des Leimungsgrades wurde eine Bewertung mit den Zahlen 1 bis 5 durchgeführt, wobei die Zahlen im einzelnen bedeuten:

| | | |
|---|---|---|
| 1 | | kein Tintendurchschlag |
| 2 | 5 - 10% | Tintendurchschlag |
| 3 | 10 - 20% | Tintendurchschlag |
| | ca. 50% | Tintendurchschlag |
| 4,5*) | ca. 90% | Tintendurchschlag |
| 5 | 100% | Tintendurchschlag |

*) Ausserdem können noch weitere Zwischenwerte herangezogen werden.

Die folgende Tabelle zeigt die Cobb-Werte der erfindungdgemässen Leimungsmittel auf vier verschiedenen Papiersorten bei drei unterschiedlichen Einsatzmengen. Zum Beweis, dass trotz wesentlich günstigerem Schaumverhalten der erfindungsgemässen Leimungsmittel diese im Vergleich zum gemäss EP 0 009 185 hergestellten Oberflächenleimungsmittel ebenfalls eine ausgezeichnete Leimungswirkung aufweisen, sind in den letzten drei Spalten der Tabelle für letzteres die Cobb-Werte bzw. die Beurteilungen der Tintenschwimmproben angegeben.

TABELLE

| Papiersorte | Cobb-Wert i. g/$m^2$ bei Zusatz von | | | Cobb-Wert i g/$m^2$ bei Zusatz von | | |
|---|---|---|---|---|---|---|
| | 0,13% | 0,16% | 0,20% | 0,13% | 0,16% | 0,20% |
| | erfindungsgemässem Leimungsmittel | | | Leimungsmittel gemäss EP 0 009 185 | | |
| Alaunfrei | 23,2 | 21,4 | 21,3 | 22,8 | 21,2 | 21,1 |
| Alaunhaltig | 21,0 | 20,3 | 20,1 | 20,3 | 20,1 | 19,9 |
| Vorgeleimt | 19,8 | 20,4 | 18,7 | 19,9 | 20,6 | 19,6 |
| Holzhaltig | 17,6 | 17,3 | 17,6 | 17,7 | 17,9 | 17,6 |

TABELLE

| Papiersorte | Bewertung d. Tintenschwimmprobe bei Zusatz von | | | Bewertung d. Tintenschwimmprobe bei Zusatz von | | |
|---|---|---|---|---|---|---|
| | 0,13% | 0,16% | 0,20% | 0,13% | 0,16% | 0,20% |
| | erfindungsgemässem Leimungsmittel | | | Leimungsmittel gemäss EP 0 009 185 | | |
| Alaunfrei | 3 | 2,5 | 2 | 1,5 | 1,5 | 1 |
| Alaunhaltig | 3 | 2,5 | 2 | 2 | 2 | 2 |
| Vorgeleimt | 2,5 | 2,5 | 2,5 | 2,5 | 2,5 | 2,5 |
| Holzhaltig | 4 | 3 | 2,5 | 4 | 4 | 3,5 |

**Patentansprüche**

1. Oberflächenleimungsmittel für Papier enthaltend wässrige oder wässrig-alkoholische Alkali-, Amin- oder Ammoniumsalzlösungen von Copolymerisaten aus Maleinsäureanhydrid und Diisobutylen und gegebenenfalls einem Vinylmonomeren der Formel

R
$>C=CH_2$ I
$R_1$

in der

R H, $-CH_3$, $-C_2H_5$, $-OR_2$, $-OCOCH_3$,

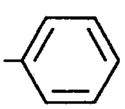, 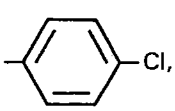-Cl, 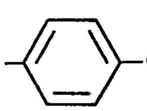$CH_3$,

$-CH_2OH$, $-CH_2-O-COCH_3$,

$R_1$ H, $-CH_3$ und
$R_2$ Alkyl bezeichnen,

wobei die Anhydridgruppen der Copolymerisate zu 25-90 Mol-% mit primären aliphatischen Monoalkoholen mit 1 bis 12 C-Atomen bisverestert sind.

4. Oberflächenleimungsmittel gemäss Anspruch 1, dadurch gekennzeichnet, dass das Vinylmonomere Isobutylen, Styrol, α-Methylstyrol, Allylalkohol und Isobutylvinylether ist.

3. Oberflächenleimungsmittel gemäss den Ansprüchen 1-2, dadurch gekennzeichnet, dass als primäre aliphatische Monoalkohole Methanol, Ethanol, n-Propanol, Isopropanol, Isobutanol, n-Butanol, sec.-Butanol, n-Pentanol, Isoamylalkohol, n-Hexanol, n-Octanol, n-Dodecanol und 2-Ethylhexanol oder Gemische dieser Alkohole eingesetzt werden.

4. Oberflächenleimungsmittel gemäss den Ansprüchen 1-3, dadurch gekennzeichnet, dass sie Harnstoff oder ein Harnstoffderivat enthalten.

5. Oberflächenleimungsmittel gemäss den Ansprüchen 1-4, dadurch gekennzeichnet, dass sie Harnstoff oder ein N-mono- oder N-di-$C_1$-$C_4$-Alkyl- oder ein N-mono- oder N-di-$C_1$-$C_4$-Hydroxyalkyl-substituiertes Harnstoffderivat enthalten.

6. Oberflächenleimungsmittel gemäss den Ansprüchen 1-5, dadurch gekennzeichnet, dass sie 10-200 Gew.-% Harnstoff oder Harnstoffderivat, bezogen auf das Gewicht der Alkali-, Amin- oder Ammoniumsalze, enthalten.

**Claims**

1. Surface sizing agents for paper containing aqueous or aqueous-alcoholic alkali metal, amine or ammonium salt solutions of copolymers of maleic anhydride and diisobutylene and, if appropriate, a vinyl monomer of the formula

R
$>C=CH_2$ I
$R_1$

in which

R designates H, $-CH_3$, $-C_2H_5$, $-OR_2$, $-OCOCH_3$,

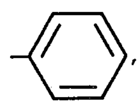, 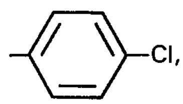-Cl, 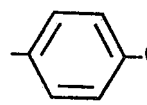$CH_3$,

$-CH_2OH$ or $-CH_2-O-COCH_3$,

$R_1$ designates H or $-CH_3$ and
$R_2$ designates alkyl,

the anhydride groups of the copolymers being bis-esterified to the extent of 25-90 mol % with primary aliphatic monoalcohols with 1 to 12 C atoms.

2. Surface sizing agents according to Claim 1, characterised in that the vinyl monomer is isobutylene, styrene, α-methylstyrene, allyl alcohol and isobutyl vinyl ether.

3. Surface sizing agents according to Claims 1-2, characterised in that methanol, ethanol, n-propanol, isopropanol, isobutanol, n-butanol, sec.-butanol, n-pentanol, isoamyl alcohol, n-hexanol, n-octanol, n-dodecanol and 2-ethylhexanol or mixtures of these alcohols are employed as primary aliphatic monoalcohols.

4. Surface sizing agents according to Claims 1-3, characterised in that they contain urea or a urea derivative.

5. Surface sizing agents according to Claims 1-4, characterised in that they contain urea or an N-mono- or N-di-$C_1$-$C_4$-alkyl- or an N-mono- or N-di-$C_1$-$C_4$--hydroxyalkyl-substituted urea derivative.

6. Surface sizing agents according to Claims 1-5, characterised in that they contain 10-200% by weight of urea or urea derivative, based on the weight of the alkali metal, amine or ammonium salts.

7. Surface sizing agents according to Claims 1-5, characterised in that they contain 20-100% by weight of urea or urea derivative, based on the weight of the alkali metal, amine or ammonium salts.

**Revendications**

1. Colles de surface pour papier, contenant des solutions aqueuses ou hydro-alcooliques de sels alcalins, d'amines ou d'ammonium de copolymères de l'anhydride maléique et de diisobutylène et le cas échéant d'un monomère vinylique de formule

R
$>C=CH_2$ I
$R_1$

dans laquelle

R représente H, $-CH_3$, $-C_2H_5$, $-OR_2$, $-OCOCH_3$,

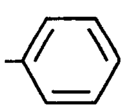 , 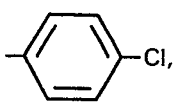Cl, 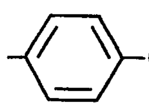$CH_3$,

$-CH_2OH$, $-CH_2-O-COCH_3$,

$R_1$ représente H, $-CH_3$ et
$R_2$ représente un groupe alkyle,

les groupes anhydrides des copolymères étant bis-estérifiés à raison de 25 à 90 moles % par des mono-alcohols aliphatiques primaires en $C_1$-$C_{12}$ .

2. Colles de surface selon la revendication 1, caractérisées en ce que le monomère vinylique est l'isobutylène, le styrène, l'α-méthylstyrène, l'alcool allylique ou l'oxyde de vinyle et d'isobutyle.

3. Colles de surface selon les revendications 1-2, caracterisées en ce que l'on utilise en tant que monoalcohols aliphatiques primaires le méthanol, l'éthanol, le n-propanol, l'isopropanol, l'iso-butanol, le n-butanol, le sec-butanol, le n-pentanol, l'alcool isoamylique, le n-hexanol, le n-octanol, le n-dodécanol, et le 2-éthylhexanol ou des mélanges de ces alcools.

4. Colles de surface selon les revendications 1-3, caractérisées en ce qu'elles contiennent de l'urée ou un dérivé de l'urée.

5. Colles de surface selon les revendications 1-4, caractérisées en ce qu'elles contiennent de l'urée ou un dérivé de l'urée mono- ou di-substitué sur l'azote par des groupes alkyle en $C_1$-$C_4$ ou hydroxyalkyle en $C_1$-$C_4$.

6. Colles de surface selon les revendications 1-5, caractérisées en ce qu'elles contiennent de 10 à 200% en poids d'urée ou de dérivé de l'urée, par rapport au poids des sels alcalins, d'amines ou d'ammonium.

7. Colles de surface selon les revendications 1-5, caractérisées en ce qu'elles contiennent de 20 à 100% en poids d'urée ou de dérivé de l'urée, par rapport au poids des sels alcalins, d'amines ou d'ammonium.